(19) **Europäisches Patentamt / European Patent Office / Office européen des brevets**

(11) **EP 4 222 363 B1**

(12) **FASCICULE DE BREVET EUROPEEN**

(45) Date de publication et mention
de la délivrance du brevet:
**28.01.2026 Bulletin 2026/05**

(21) Numéro de dépôt: **21773637.0**

(22) Date de dépôt: **17.09.2021**

(51) Classification Internationale des Brevets (IPC):
**F02D 13/02** (2006.01) **F02D 11/10** (2006.01)
**F02D 41/14** (2006.01) **F02D 41/00** (2006.01)

(52) Classification Coopérative des Brevets (CPC):
**F02D 41/0002; F02D 13/0261;** F02D 41/0007;
F02D 41/0062; F02D 41/1446; F02D 41/145;
F02D 2041/001; F02D 2041/1433; F02D 2200/021;
F02D 2200/0402; F02D 2200/0406;
F02D 2200/0414; F02D 2200/101; Y02T 10/12;
Y02T 10/40

(86) Numéro de dépôt international:
**PCT/EP2021/075573**

(87) Numéro de publication internationale:
**WO 2022/069251 (07.04.2022 Gazette 2022/14)**

(54) **PROCÉDÉ DE DÉTERMINATION DE LA MASSE DE GAZ ASPIRÉ DANS UN CYLINDRE AVEC PRISE EN COMPTE DES CONDITIONS RÉELLES D'UTILISATION**

VERFAHREN ZUR BESTIMMUNG DER MASSE VON ASPIRIERTEM GAS IN EINEM ZYLINDER UNTER BERÜCKSICHTIGUNG REALER VERWENDUNGSBEDINGUNGEN

METHOD FOR DETERMINING THE MASS OF ASPIRATED GAS IN A CYLINDER, THE METHOD TAKING INTO ACCOUNT REAL CONDITIONS OF USE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.09.2020 FR 2009884**

(43) Date de publication de la demande:
**09.08.2023 Bulletin 2023/32**

(73) Titulaire: **IFP Energies nouvelles**
**92500 Rueil-Malmaison (FR)**

(72) Inventeurs:
• **KASSA, Mateos**
**92852 RUEIL-MALMAISON CEDEX (FR)**
• **LEROY, Thomas**
**92852 RUEIL-MALMAISON CEDEX (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**EP-A1- 3 650 678      WO-A1-2017/093638**
**FR-A1- 3 070 435**

• **LEROY T ET AL: "Control-oriented aspirated masses model for variable-valve-actuation engines", CONTROL ENGINEERING PRACTICE, PERGAMON PRESS, OXFORD, GB, vol. 21, no. 12, 27 September 2013 (2013-09-27), pages 1744 - 1755, XP028778556, ISSN: 0967-0661, DOI: 10.1016/J.CONENGPRAC.2013.08.012**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

- **LEROY T ET AL: "Modeling Fresh Air Charge and Residual Gas Fraction on a Dual Independent Variable Valve Timing SI Engine", vol. 1, no. 1, 14 April 2008 (2008-04-14), pages 627 - 635, XP002682108, ISSN: 1946-3936, Retrieved from the Internet <URL:http://papers.sae.org/ 2008-01-0983/> DOI: 10.4271/2008-01-0983**

## Description

### Domaine technique

La présente invention concerne le domaine de la détermination de la masse de gaz aspiré dans une chambre de combustion d'un moteur à combustion interne.

Les contraintes liées à la consommation et aux émissions de polluants des moteurs à combustion interne ont entraînées d'importantes modifications de ces derniers. La réduction de la taille de la cylindrée *(« downsizing »)* apparaît comme étant la plus prometteuse des issues. En effet, elle permet de déplacer les points de fonctionnement du moteur dans des zones de meilleur rendement (réduction des pertes par pompage). Le fonctionnement d'un tel moteur peut bénéficier alors la présence d'un turbocompresseur pour assurer un couple de sortie équivalent à un moteur de cylindrée classique. Couplé avantageusement à une injection directe du carburant, ce type de moteur peut bénéficier de la présence d'une distribution variable pour profiter du plein potentiel à faible et à pleine charge. Le terme « distribution variable » VVT (de l'Anglais « variable valve timing ») désigne ici une technologie permettant de faire varier le phasage des soupapes d'admission et/ou d'échappement.

L'objectif du contrôle moteur est de garantir la réponse en couple à une demande du conducteur (via par exemple la pédale d'accélérateur), tout en minimisant les polluants et la consommation. Sur un moteur essence, le catalyseur trois voies assure le traitement des espèces polluantes (oxydes d'azote, NOx, hydrocarbures, HC, et monoxyde de carbone, CO). Ce dernier ne fonctionne de façon optimale que dans une plage étroite de fonctionnement, i.e. lorsque les proportions du mélange air / carburant permettent d'assurer une combustion complète du carburant.

Dans un moteur à distribution fixe, le remplissage en air est donné par une relation statique dépendant principalement du régime et de la pression d'admission. Contrôler la masse d'air dans le cylindre revient donc principalement à contrôler la pression d'admission via le papillon d'admission. Dans un moteur à distribution variable de type VVT, le remplissage dépend également des instants d'ouverture et de fermeture des soupapes d'admission et d'échappement. Le déphasage des soupapes permet de modifier la quantité de gaz brûlés dans la chambre en permettant une recirculation interne des gaz provenant de la combustion précédente. Tout d'abord, la modification de l'angle de fermeture de la soupape d'admission permet de moduler le volume d'air admissible. Cela conduit à une diminution de la consommation en minimisant les pertes par pompage à faible charge. À forte charge, il permet de prendre avantage de l'effet coup de bélier pour maximiser la charge d'air frais. Deuxièmement, la modification du chevauchement des soupapes (moment où les deux soupapes sont ouvertes ensemble) permet une recirculation interne des gaz. Ce phénomène dépend de l'état de fonctionnement du moteur car il est fonction de la différence de pression entre le collecteur d'admission et le collecteur d'échappement. Sous charge partielle, il permet une recirculation des gaz d'échappement qui entraîne une réduction de la consommation et une réduction des émissions d'oxydes (NOx). À charge élevée, l'augmentation du chevauchement des soupapes permet de faire circuler des gaz frais à travers le cylindre, chassant ainsi les gaz brûlés résiduels. C'est l'effet de balayage (« scavenging » en Anglais) qui permet un démarrage plus précoce de la turbine du turbocompresseur. Cela contribue à augmenter la charge du moteur à bas régime. Dans une perspective de contrôle, une tâche de base consiste à gérer la consigne du couple moteur selon les demandes du conducteur, tout en limitant les émissions polluantes. Sur les moteurs à allumage commandé, le contrôle du couple est obtenu par la gestion de la masse d'air aspirée, tout en conservant le rapport carburant/air à la valeur stœchiométrique afin de minimiser les émissions à l'échappement. Pour atteindre ces deux objectifs de contrôle, la connaissance de la masse d'air aspiré est nécessaire. Parce qu'il n'y a pas de capteurs de type production capables de mesurer cette quantité, il est courant de déduire la masse d'air aspiré d'autres mesures. Si les conditions de fonctionnement aux limites du cylindre sont connues avec précision, les modèles en régime permanent (appelés modèles de valeur moyenne) sont capables de décrire les performances d'admission avec une bonne précision, même en fonctionnement transitoire. Dans le cas d'une distribution fixe, la masse d'air aspiré est directement calculée à partir des grandeurs thermodynamiques du collecteur d'admission grâce à une relation en fonction du rendement volumétrique. Cette relation est bien connue et est employée dans les modules de commande des moteurs à distribution fixe ECU (de l'Anglais « Electronic Control Unit »). Sur les moteurs équipés de VVT, la masse d'air aspiré est profondément affectée par les phénomènes évoqués ci-dessus.

La masse de gaz aspiré dans une chambre de combustion est un paramètre utile notamment pour le contrôle des moteurs à combustion interne, pour les tests des moteurs à combustion interne, afin d'analyser notamment la combustion, d'améliorer les stratégies de contrôle de la combustion, d'améliorer le comportement cycle à cycle et entre cylindres d'un moteur à combustion interne. La connaissance de ce paramètre est important en particulier pour les moteurs à allumage commandé et pour les moteurs Diesel équipés d'une recirculation des gaz d'échappement (EGR) et/ou d'une distribution variable.

### Technique antérieure

En particulier, certaines méthodes sont basées sur des mesures de la pression d'admission, qui peut ne pas représenter de manière fiable les phénomènes physiques mis en jeu au sein de la chambre de combustion. D'autres méthodes nécessitent des techniques de traitement de signal qui peuvent être complexes, longues et qui peuvent également générer des imprécisions sur la masse estimée de gaz aspiré.

La demande de brevet WO 2007060349 décrit une méthode basée sur l'utilisation d'un capteur de pression dans le cylindre et d'un capteur de température en aval de la soupape d'échappement. Ainsi, cette méthode nécessite une instrumentation spécifique du moteur à combustion interne. En outre, cette méthode reconstruit la température du gaz dans le cylindre à partir de la mesure du capteur de température en aval de la soupape d'échappement. Cette reconstruction génère des approximations, qui influent sur la précision de la masse estimée de gaz aspiré.

Des techniques décrivent l'évaluation de la masse de gaz aspiré sur la base d'une modélisation qui intègre des mesures de température, pression, vitesse de rotation du moteur, comme par exemple :

- Leroy, Thomas, and Jonathan Chauvin. "Control-oriented aspirated masses model for variable-valve-actuation engines. " Control Engineering Practice 21. 12 (2013): 1744-1755.

Les techniques selon l'art antérieur sont corrigées uniquement avec des paramètres de calibration issus de cartographies de calibration. Ces cartographies sont établies sur des points de fonctionnement incrémentaux sur la plage de fonctionnement du moteur, dans des conditions de laboratoire, ou bien lors de tests faisant partie de protocoles préétablis. Donc les techniques selon l'art antérieur présentent l'inconvénient de ne pas modéliser fidèlement les conditions réelles d'émission de polluants RDE (de l'Anglais « Real Driving Emissions »), le fonctionnement du moteur durant des phases transitoires comme la montée en température, l'intégration des dispositifs de recirculation des gaz d'échappement EGR (de l'Anglais « Exhaust Gas Recirculation »), l'intégration du filtre à particules FAP, etc.

Résumé de l'invention

Un objectif général visé par l'invention est de fournir une modélisation fidèle de la masse de gaz aspiré, tout en limitant le nombre de capteurs. L'objet de l'invention concerne un procédé et un système pour assurer la détermination et le contrôle des masses d'air et de gaz brûlés dans le cylindre, en prenant en compte les dynamiques du système. Le procédé permet de piloter la masse de gaz aspiré en prenant en compte différents paramètres du système.

Dans la suite de la description on utilise les notations suivantes :

- $m_{asp}^{INT}$ : masse de gaz aspiré de l'admission,

- $N$ : régime moteur,

- MAT (de l'Anglais « intake manifold temperature ») : température dans le collecteur d'admission,

- MAP (de l'Anglais « intake manifold pressure ») : pression dans le collecteur d'admission,

- $P_3^{nom}$ : pression nominale des gaz d'échappement, pression avec laquelle le modèle a été calibré selon les conditions et le protocole au banc, sur un ensemble de points de fonctionnement

- $P_3$ : pression des gaz d'échappement,

- IVC : fermeture des soupapes d'admission, de l'Anglais « Intake Valve Closing »,

- $V_{IVC}$ : volume de la chambre de combustion à la fermeture de la soupape d'admission,

- $EVC$ : fermeture de la soupape d'échappement, de l'Anglais « Exhaust Valve Closing »,

- $V_{EVC}$ : volume de la chambre de combustion à la fermeture de la soupape d'échappement,

- VVT (int, exh): positions VVT (qui permettent de calculer $V_{IVC}$ et $V_{EVC}$),

- $\Psi$ : débit massique à travers les soupapes en utilisant l'équation de Barré de Saint-Venant,

- $OF$ : facteur de chevauchement, fonction des calages des soupapes d'admission et d'échappement,

- $\alpha_1$ : paramètre de calibration établi en fonction du régime moteur et de la pression dans le collecteur d'admission,

- $\alpha_2$ : paramètre de calibration établi en fonction du régime moteur et de la pression dans le collecteur d'admission,

- $\alpha_3$ : paramètre de calibration établi en fonction du régime moteur et de la pression dans le collecteur d'admission,

- $\alpha'_1 \cdot$ : paramètres de calcul intermédiaire

- $\alpha'_2 \cdot$ : paramètres de calcul intermédiaire

- $\alpha'_3 \cdot$ : paramètres de calcul intermédiaire

- $R$ : constante des gaz,

- $T_{INT}$ : température de gaz aspiré à l'admission,

- $T_{INT}^{real}$ : température de gaz aspiré à l'admission, mesurée,

- $T_{INT}^{nom}$ : température de gaz aspiré à l'admission, nominale,

- $T_{EXH}$ : température de gaz aspiré de l'échappement,

- $T_{IVC}$ : température gaz dans la chambre de combustion à la fermeture de la soupape d'admission,

- $T_{EXH}$ : température gaz dans la chambre de combustion à la fermeture de la soupape de l'échappement,

- $P_{IVC}$ : pression gaz dans la chambre de combustion à la fermeture de la soupape d'admission,

- $P_{EVC}$ : pression gaz dans la chambre de combustion à la fermeture de la soupape d'échappement,

- $m_{asp}^{INT}$ : masse de gaz aspiré de l'admission,

- $m_{asp}^{EXH}$ : masse de gaz aspiré de l'échappement,

- $m_{IVC}$ : masse de gaz dans la chambre de combustion à la fermeture de la soupape d'admission,

- $\Theta_{Teau}$ : fonction de la température moteur, qui représente l'impact de la température d'eau moteur sur le remplissage,

- $\Theta_{transient}$ : fonction de la température moteur, qui représente l'impact de l'inertie thermique du bloc moteur sur le remplissage.

La présente invention concerne un procédé de détermination d'une masse de gaz aspiré dans un cylindre d'un moteur à combustion interne, ledit cylindre comportant au moins une soupape d'admission et au moins une soupape d'échappement, dans lequel on met en œuvre les étapes suivantes :

- on détermine un régime moteur ;

- on détermine un volume de la chambre de combustion à la fermeture de ladite au moins une soupape d'admission ;

- on détermine un volume de la chambre de combustion à la fermeture de ladite au moins une soupape d'échappement ;

- on détermine une température de gaz d'admission et une pression de gaz d'admission ;

- on détermine une masse de gaz aspiré d'admission à partir du volume de la chambre de combustion à la fermeture de ladite au moins une soupape d'admission, de la température de gaz d'admission et de la pression de gaz d'admission ;

- on détermine un paramètre de chevauchement de l'ouverture desdites au moins une soupape d'admission et au moins une soupape d'échappement à partir du volume de la chambre de combustion à la fermeture de ladite au moins une soupape d'admission et du volume de la chambre de combustion à la fermeture de ladite au moins une soupape d'échappement, du régime moteur et de la température de gaz d'admission ;

- on détermine une masse de gaz aspiré d'échappement à partir du volume de la chambre de combustion à la fermeture de ladite au moins une soupape d'échappement et de la température de gaz d'admission ; et

- on génère une pluralité de paramètres de calibration en fonction du régime moteur et de la pression de gaz d'admission

- on applique les paramètres de calibration au moins à la masse de gaz aspiré d'admission, au paramètre de chevauchement de l'ouverture desdites au moins une soupape d'admission et au moins une soupape d'échappement et à la masse de gaz aspiré d'échappement ;

- on détermine au moins une condition à l'échappement et/ou au moins une condition de la température du moteur ; et

- on détermine la masse de gaz aspiré au moyen d'une formule qui dépend de la masse de gaz aspiré d'admission, du paramètre de chevauchement de l'ouverture desdites au moins une soupape d'admission et au moins une soupape d'échappement et de la masse de gaz aspiré d'échappement auxquels on a appliqué les paramètres de calibration, et auxquels on applique un mécanisme de correction modélisé en fonction de ladite au moins une condition à l'échappement, de ladite au moins une condition de la température du moteur ou de la combinaison desdites conditions à l'échappement et de la température du moteur.

Selon l'invention, le mécanisme de correction modélisé en fonction des conditions à l'échappement consiste en :

- une translation du paramètre de calibration pour corriger le paramètre associé avec le chevauchement de l'ouverture desdites au moins une soupape d'admission et au moins une soupape d'échappement ; et/ou
- une altération du paramètre de calibration associé à la masse de gaz aspiré d'échappement.

Préférablement, ladite au moins une condition à l'échappement est générée en fonction de la variation d'une pression de gaz à l'échappement. Préférablement, les conditions à l'échappement sont générées au moyen d'un modèle de la pression des gaz à l'échappement.

Selon un mode de réalisation de l'invention, on détermine ladite masse de gaz aspiré au moyen de l'équation

$$m_{asp}^{INT} = \left( \alpha_1(N, MAP) \cdot \frac{MAP \cdot V_{IVC}}{R \cdot MAT} - \alpha_2(N, MAP + P_3^{nom} - P_3) \cdot \frac{OF}{N \cdot MAT} - \alpha_3(N, MAP) \cdot \frac{V_{EVC}}{MAT} \frac{P_3}{P_3^{nom}} \right)$$

Selon un mode de réalisation de l'invention, le mécanisme de correction modélisé en fonction des conditions de la température du moteur consiste en une altération identique, appliquée à la pluralité de paramètres de calibration.

• Selon un mode de réalisation de l'invention, les conditions de la température du moteur sont générées notamment au moyen de la variation de la mesure de la température des gaz aspirés à l'admission. Préférablement, on détermine ladite masse de gaz aspiré au moyen de l'équation

$$m_{asp}^{INT} = \left( \alpha_1(N, MAP) \cdot \frac{T_{INT}^{nom}}{T_{INT}^{real}} \cdot \frac{MAP \cdot V_{IVC}}{R \cdot MAT} - \alpha_2(N, MAP) \cdot \frac{T_{INT}^{nom}}{T_{INT}^{real}} \cdot \frac{OF}{N \cdot MAT} - \alpha_3(N, MAP) \cdot \frac{T_{INT}^{nom}}{T_{INT}^{real}} \cdot \frac{V_{EVC}}{MAT} \right)$$

Selon un mode de réalisation de l'invention, on détermine ladite masse de gaz aspiré au moyen de l'équation :

$$m_{asp}^{INT} = \left( \alpha_1(N, MAP) \cdot \frac{T_{INT}^{nom}}{T_{INT}^{real}} \cdot \frac{MAP \cdot V_{IVC}}{R \cdot MAT} - \alpha_2(N, MAP + P_3^{nom} - P_3) \cdot \frac{T_{INT}^{nom}}{T_{INT}^{real}} \cdot \frac{OF}{N \cdot MAT} - \alpha_3(N, MAP) \cdot \frac{T_{INT}^{nom}}{T_{INT}^{real}} \cdot \frac{V_{EVC}}{MAT} \frac{P_3}{P_3^{nom}} \right)$$

Préférablement, les conditions de la température du moteur dépendent notamment des conditions transitoires de température du moteur. Avantageusement, on détermine ladite masse de gaz aspiré au moyen de l'équation :

$$m_{asp}^{INT} = \left( \alpha_1(N, MAP) \cdot \frac{MAP \cdot V_{IVC}}{R \cdot MAT} - \alpha_2(N, MAP) \cdot \frac{OF}{N \cdot MAT} - \alpha_3(N, MAP) \cdot \frac{V_{EVC}}{MAT} \right) \cdot \frac{1}{\Theta_{Teau} * \Theta_{transient}}$$

Selon un mode de réalisation de l'invention, le moteur à combustion interne est équipé d'une distribution variable et lesdites au moins une soupape d'admission et au moins une soupape d'échappement étant l'une, l'autre ou les deux actionnées par au moins un actionneur de distribution variable.

Selon un mode de réalisation de l'invention, ladite au moins une soupape d'admission est reliée à un collecteur d'admission qui est muni d'un papillon d'admission qui est piloté notamment en fonction du paramètre de chevauchement de l'ouverture desdites au moins une soupape d'admission et au moins une soupape d'échappement. Préférablement, on détermine les positions des actionneurs de distribution variable en réalisant les étapes suivantes :

- on détermine la position d'un premier actionneur au moyen d'une cartographie ;

- on détermine la position d'un second actionneur au moyen de la position du premier actionneur et d'une mesure de pression d'admission et d'une masse de gaz ; et

- on modifie la position du premier actionneur si la position du second actionneur correspond à une position limite pour ledit second actionneur.

L'invention concerne également un système de contrôle d'un moteur à combustion interne mettant en œuvre le procédé selon l'un des modes de réalisation détaillés plus haut.

L'invention concerne également un système de contrôle de moteur à combustion interne mettant en œuvre les étapes suivantes :

- on détermine la masse de gaz aspiré au moyen du procédé de l'un des modes de réalisation détaillés plus haut ;
- on génère une consigne de masse de gaz aspiré ;
- on contrôle le moteur en fonction de la comparaison entre consigne de masse de gaz aspiré et masse déterminée de gaz aspiré.

D'autres caractéristiques et avantages du procédé selon l'invention, apparaîtront à la lecture de la description ci-après d'exemples non limitatifs de réalisations, en se référant aux figures annexées et décrites ci-après.

Liste des figures

La figure 1 illustre, schématiquement un moteur à combustion interne.
La figure 2 illustre une loi de levée des soupapes pour une distribution variable.
La figure 3 illustre, schématiquement et de manière non limitative, la comparaison de courbes représentant différentes corrections de l'estimation de la masse de gaz aspiré.

Description des modes de réalisation

Les techniques selon l'art antérieur présentent l'inconvénient de ne pas modéliser fidèlement les conditions réelles d'émission de polluants RDE, le fonctionnement du moteur durant des phases transitoires comme la montée en température, l'intégration des dispositifs de recirculation des gaz d'échappement EGR, l'intégration du filtre à particules FAP, etc. De plus, l'homme de l'art, confronté au besoin d'établir des cartographies, doit mettre en œuvre des protocoles de tests expérimentaux très coûteux pour obtenir un grand ensemble de données pour former un modèle de boîte noire. Pour cette raison, une approche basée sur la physique est d'une importance capitale.

Le modèle proposé par l'invention présente l'intérêt d'utiliser uniquement des capteurs utilisés habituellement par le boitier de contrôle du moteur. En effet, l'état de la technique actuelle ne permet pas de placer, avec des coûts acceptables, des capteurs dans la chambre de combustion, donc, pour le procédé selon l'invention, la chambre de combustion ne comporte aucun capteur spécifique pour évaluer les quantités d'air frais et de gaz brulés.

Un objectif général visé par l'invention est de fournir une modélisation fidèle de la masse de gaz aspiré, tout en limitant le nombre de capteurs. L'objet de l'invention concerne un procédé et un système pour déterminer et pour assurer le contrôle des masses d'air et de gaz brûlés dans le cylindre, en prenant en compte les dynamiques du système. Le procédé permet notamment de piloter la masse de gaz aspiré en prenant en compte différents paramètres du système.

L'objectif général du procédé est de déterminer précisément la masse de gaz aspiré puisqu'elle est directement liée au couple et à la richesse.

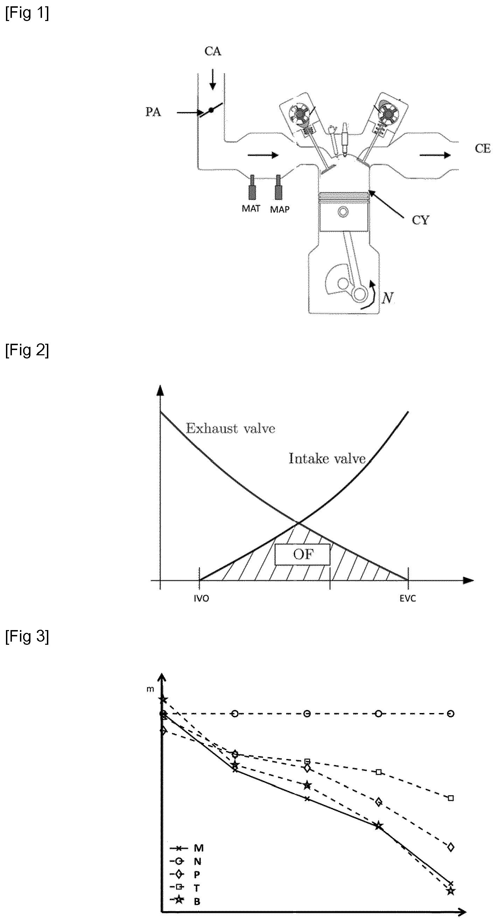

De manière classique, un moteur à combustion interne comprend au moins un cylindre, un piston coulissant dans ce cylindre en un mouvement rectiligne alternatif, des moyens d'admission d'un comburant (gaz), des moyens d'échappement de gaz brûlés, une chambre de combustion, et des moyens d'injection pour injecter un combustible dans la chambre de combustion. La chambre de combustion est agencée dans la partie haute de cylindre, et son volume varie par le déplacement du piston dans le cylindre. La figure 1 illustre, schématiquement et de manière non limitative, un cylindre d'un moteur à combustion interne selon un mode de réalisation de l'invention. Sur cette figure, tous les moyens d'admission, d'échappement, d'injection, et les éventuels moyens d'allumage ne sont pas représentés. Au sein du cylindre se déplace un piston selon un mouvement rectiligne alternatif. La chambre de combustion est la zone où se produit la combustion, elle est limitée par la partie supérieure du piston, la paroi latérale du cylindre, et le toit du cylindre, qui fait habituellement partie de la culasse du moteur. En outre, selon des modes de réalisation de l'invention, le collecteur d'échappement peut comporter un capteur de pression P3 et le moteur à combustion interne peut comporter un capteur de température. Le capteur de température peut être utilisé pour établir $\Theta_{Teau}$, qui est une fonction de la température moteur et qui représente l'impact de la température d'eau moteur sur le remplissage. Ces capteurs de pression et température sont non représentés.

Le moteur à combustion interne peut être de tout type, à allumage commandé ou à auto-inflammation, avec ou sans recirculation des gaz d'échappement, avec ou sans suralimentation. Toutefois, le procédé selon l'invention est particulièrement adapté aux moteurs à allumage commandé, et aux moteurs à auto-inflammation équipés d'une recirculation des gaz d'échappement (EGR) et/ou d'une distribution variable et, avantageusement, une suralimentation.

Par le terme gaz, il est compris de l'air à pression ambiante ou de l'air suralimenté ou encore un mélange d'air (suralimenté ou non) avec des gaz brûlés.

Le procédé de l'invention permet de déterminer des masses de gaz aspirés dans un cylindre en caractérisant les flux de gaz entre l'admission et l'échappement en décomposant suivant trois éléments principaux :

A- la masse de gaz aspirée d'admission,

B- la masse de gaz qui s'échange durant l'intervalle de temps lors du chevauchement des soupapes d'admission et d'échappement, et

C- la masse de gaz aspiré, venant de l'échappement.

Le cylindre d'un moteur à combustion interne selon l'invention comporte au moins une soupape d'admission et au moins une soupape d'échappement. Lesdites soupapes sont habituellement reliées à un collecteur d'admission et respectivement à un collecteur d'échappement. Le procédé met en œuvre les étapes suivantes :

- on détermine un régime moteur ;
- on détermine un volume de la chambre de combustion à la fermeture de ladite au moins une soupape d'admission ;
- on détermine un volume de la chambre de combustion à la fermeture de ladite au moins une soupape d'échappement ;
- on détermine une température de gaz d'admission et une pression de gaz d'admission
- on détermine une masse de gaz aspiré d'admission (en d'autres termes la masse de gaz aspiré par l'admission - correspondant à l'étape A exposée ci-dessus) à partir du volume de la chambre de combustion à la fermeture de ladite au moins une soupape d'admission, de la une température de gaz d'admission, et de la pression de gaz d'admission ;
- on détermine un paramètre de chevauchement de l'ouverture desdites au moins une soupape d'admission et au moins une soupape d'échappement à partir du volume de la chambre de combustion à la fermeture de ladite au moins une soupape d'admission et du volume de la chambre de combustion à la fermeture de ladite au moins une soupape d'échappement, du régime moteur, et de la température de gaz d'admission (ainsi on peut déterminer la masse de gaz qui s'échange durant l'intervalle de temps lors du chevauchement des soupapes d'admission et d'échappement - correspondant à l'étape B exposée ci-dessus);
- on détermine une masse de gaz aspiré d'échappement (en d'autres termes la masse de gaz venant de l'échappement - correspondant à l'étape C exposée ci-dessus) à partir du volume de la chambre de combustion à la fermeture de ladite au moins une soupape d'échappement et de la température de gaz d'admission ; et
- on génère une pluralité de paramètres de calibration en fonction du régime moteur et de la pression de gaz d'admission ;
- on applique les paramètres de calibration au moins à la masse de gaz aspiré d'admission, au paramètre de chevauchement de l'ouverture desdites au moins une soupape d'admission et au moins une soupape d'échappement, et à la masse de gaz aspiré d'échappement ;
- on détermine des conditions à l'échappement et/ou des conditions de la température du moteur ;
- on détermine la masse de gaz aspiré au moyen d'une formule qui dépend de la masse de gaz aspiré d'admission, du paramètre de chevauchement de l'ouverture desdites au moins une soupape d'admission et au moins une soupape d'échappement et de la masse de gaz aspiré d'échappement auxquels on a appliqué les paramètres de calibration, et auxquels on applique un mécanisme de correction modélisé en fonction des conditions à l'échappement, des conditions de la température du moteur ou de la combinaison desdites conditions à l'échappement et de la température du moteur.

Par opposition au modèle de l'art de la technique, le modèle d'estimation du remplissage d'air selon l'invention propose d'intégrer les conditions de pression au niveau du collecteur d'échappement et/ou les conditions de température de l'eau pour estimer avec précision la masse de gaz aspiré. De préférence, le procédé selon l'invention peut mettre en œuvre un modèle d'estimation de la masse de gaz aspiré qui intègre à la fois les conditions de pression au niveau du collecteur d'échappement ainsi que les conditions de température, de manière à déterminer de manière précise la masse de gaz aspiré dans le cylindre.

Les termes $\alpha_1$, $\alpha_2$ et $\alpha_3$ servent comme paramètres de calibration et sont cartographiés en fonction du régime moteur et de la pression du répartiteur d'admission ($\alpha_x(N,MAP)$). On notera que ces termes $\alpha_1$, $a_2$ et $\alpha_3$ ne tiennent pas compte des températures, ni de la pression à l'échappement. Par conséquent, le modèle tel que défini dans l'art antérieur n'intègre pas ces paramètres physiques, ce qui représente une limite du modèle. Dans d'autres mots, l'une des limites de ce modèle est qu'il ne tient pas compte des facteurs supplémentaires qui peuvent influencer la masse de gaz aspiré. Notamment, sur les moteurs plus récents dotés d'une recirculation des gaz d'échappement et de turbocompresseur, l'influence des conditions d'échappement sur la masse de gaz aspiré peut être importante. De plus, avec des restrictions accrues sur les émissions de $CO_2$, de nouvelles stratégies de contrôle du moteur sont mises en place par les constructeurs automobiles qui peuvent influencer le processus de refroidissement du moteur, et donc l'estimation de la masse de gaz aspiré.

La figure 2 illustre le chevauchement de l'ouverture desdites au moins une soupape d'admission et au moins une soupape d'échappement. La zone hachurée OF représente le chevauchement de l'ouverture desdites au moins une soupape d'admission et au moins une soupape d'échappement. Cette zone est délimitée par la courbe représentant l'ouverture de la soupape d'admission, qui passe par le point d'ouverture de la soupape d'admission (IVO de l'Anglais « Intake Valve Opening ») et par la courbe représentant la fermeture de la soupape d'échappement, qui passe par le point de fermeture (EVC de l'Anglais « Exhaust Valve Closing »).

La détermination de la masse de gaz aspiré proposée par l'invention peut être décomposée selon les relations décrites dans les équations ci-dessous :

[Math 1]

$$T_{IVC} \cdot m_{IVC} = T_{INT} \cdot m_{asp}^{INT} + T_{EXH} \cdot m_{asp}^{EXH}$$

[Math 2]

$$m_{IVC} = \frac{P_{IVC} \cdot V_{IVC}}{R \cdot T_{IVC}}$$

[Math 3]

$$m_{asp}^{EXH} = \alpha'_2 \cdot \Psi(MAP, P_3, T_{INT}, T_{EXH}) \cdot \frac{OF}{N} + \alpha'_3 \cdot \frac{P_3 \cdot V_{EVC}}{R \cdot T_{EXH}}$$

Dans l'équation 1, la température à l'IVC (à la fermeture de la soupape d'admission) est une moyenne pondérée en masse de la température de gaz aspiré de l'admission ($T_{INT}$) et d'échappement ($T_{EXH}$). En effet, on note la conservation d'énergie avec une hypothèse d'identique capacité thermique à l'admission et à l'échappement. Dans l'équation 2, on s'appuie sur la loi des gaz parfaits pour calculer la masse de gaz aspiré à l'IVC, et on pose :

[Math 4]

$$P_{IVC} = \alpha'_1 \cdot MAP$$

Dans l'équation 3, on retrouve la masse de gaz aspiré de l'échappement en tant que combinaison de la masse refluant vers le répartiteur d'admission pendant le chevauchement des soupapes et de la masse restant dans le cylindre à l'EVC. Ici, il est considéré

[Math 5]

$$\frac{P_{EVC}}{T_{EVC}} = \frac{\alpha'_3 \cdot P_3}{T_{EXH}}$$

Finalement,

[Math 6]

$$\Psi(MAP, P_3, T_{INT}, T_{EXH})$$

représente le débit massique à travers les soupapes en utilisant l'équation de Barré de Saint-Venant.

Les relations décrites dans les équations 1 à 6 permettent de formuler l'expression suivante pour estimer la masse de gaz aspiré :

[Math 7]

$$m_{asp}^{INT} = \alpha'_1 \cdot \frac{MAP \cdot V_{IVC}}{R \cdot T_{INT}} - \alpha'_2 \cdot \Psi \cdot \frac{OF}{N} \cdot \frac{T_{EXH}}{T_{INT}} - \alpha'_3 \cdot \frac{P_3 \cdot V_{EVC}}{R \cdot T_{INT}}$$

Dans l'équation 7, le terme $\frac{MAP \cdot V_{IVC}}{R \cdot T_{INT}}$ correspond à une approximation de la masse de gaz aspiré d'admission,

le terme $\Psi \cdot \frac{OF}{N} \cdot \frac{T_{EXH}}{T_{INT}}$ correspond à une approximation de la masse de gaz qui s'échange durant l'intervalle de temps lors du chevauchement des soupapes d'admission et d'échappement, et le terme $\frac{P_3 \cdot V_{EVC}}{R \cdot T_{INT}}$ correspond à une approximation de la masse de gaz venant de l'échappement.

Selon l'invention, le mécanisme de correction modélisé en fonction des conditions à l'échappement consiste en :

- une translation du paramètre de calibration pour corriger le paramètre de chevauchement de l'ouverture desdites au moins une soupape d'admission et au moins une soupape d'échappement ; et/ou
- une altération du paramètre de calibration de la masse de gaz aspiré d'échappement.

A titre d'exemple de mise en œuvre de l'invention dans un véhicule, on peut procéder à quelques simplifications. Dans cet exemple, les seules mesures disponibles sont les suivantes :

En posant

[Math 8]

$$\alpha_1 = \alpha'_1 * \frac{MAT}{T_{INT}}$$

[Math 9]

$$\alpha_2 = \alpha'_2 * \Psi * \frac{MAT * T_{EXH}}{T_{INT}}$$

[Math 10]

$$\alpha_3 = \alpha'_3 * \frac{MAT * P_3}{R * T_{INT}}$$

On obtient alors :

[Math 11]

$$m_{asp}^{INT} = \alpha_1 \cdot \frac{MAP \cdot V_{IVC}}{R \cdot MAT} - \alpha_2 \cdot \frac{OF}{N \cdot MAT} - \alpha_3 \cdot \frac{V_{EVC}}{MAT}$$

Donc selon ce premier mode de mise en œuvre de l'invention, le mécanisme de correction modélisé en fonction des conditions à l'échappement consiste en :

- une translation du paramètre de calibration pour corriger le paramètre de chevauchement de l'ouverture desdites au moins une soupape d'admission et au moins une soupape d'échappement ; et/ou
- une altération du paramètre de calibration de la masse de gaz aspiré d'échappement.

Préférablement, ladite au moins une condition à l'échappement est générée en fonction de la variation d'une pression de gaz à l'échappement. Alternativement, on peut mettre en œuvre un capteur de pression à l'échappement du moteur à combustion interne. Encore préférablement, les conditions à l'échappement sont générées au moyen d'un modèle de la pression des gaz à l'échappement. En effet, mesurer la pression des gaz à l'échappement nécessite d'utiliser un capteur se trouvant situé au niveau du collecteur d'échappement, par exemple entre la soupape d'échappement et le turbocompresseur, si le moteur en est équipé. En pratique, l'homme de l'art peut éviter de placer un capteur de pression et on peut modéliser ladite pression en fonction d'autres paramètres comme par exemple sur la mesure de la pression atmosphérique ou bien en se basant sur le mode de fonctionnement du turbocompresseur, filtre à particules ou tout dispositif se trouvant sur le collecteur d'échappement. Dans le cas d'un turbocompresseur, le dispositif de contrôle peut fournir des informations qui peuvent être intégrées dans le modèle de la pression des gaz à l'échappement. Ces informations peuvent par exemple comprendre le régime de puissance du turbocompresseur, qui donne un indice fiable sur le ratio de la pression.

On remarque que lors de l'utilisation réelle du moteur, si la pression échappement n'est pas égale à la pression avec laquelle le modèle a été calibré ( $P_3 \neq P_3^{nom}$ à cause d'un chargement du filtre à particule, d'un transitoire de VGT, d'une variation de pression atmosphérique ou de variation d'EGR), alors les termes

[Math 12]

$$\alpha_2 = \alpha'_2 * \Psi * \frac{MAT * T_{EXH}}{T_{INT}}$$

[Math 13]

$$\alpha_3 = \alpha'_3 * \frac{MAT * P_3}{R * T_{INT}}$$

vont être impactés.

Pour ce premier mode de réalisation, l'équation suivante résume la formulation du modèle avec ajout du correctif de prise en compte des conditions échappement :

[Math 14]

$$m_{asp}^{INT} = \left( \alpha_1(N, MAP) \cdot \frac{MAP \cdot V_{IVC}}{R \cdot MAT} - \alpha_2(N, MAP + P_3^{nom} - P_3) \cdot \frac{OF}{N \cdot MAT} - \alpha_3(N, MAP) \right.$$
$$\left. \cdot \frac{V_{EVC}}{MAT} \frac{P_3}{P_3^{nom}} \right)$$

La prise en compte de l'impact des conditions échappement est double :

- Le terme correctif sur la deuxième expression $\alpha_2(N, MAP + P_3^{nom} - P_3) * \frac{OF}{N*MAT}$ sert à incorporer l'augmentation (ou la diminution) potentielle de la pression d'échappement en la représentant comme un changement dans la pression du collecteur d'admission. Cette simplification est motivée par les propriétés des équations de Barré Saint-Venant que le second terme vise à saisir. Ici la correction correspond à une translation dans la cartographie, ladite translation tenant compte de la valeur $P_3^{nom} - P_3$. Dans d'autres mots, on se déplace à droite ou à gauche dans la cartographie de manière à sélectionner un paramètre de calibration $\alpha_2$ d'une autre case de la cartographie.

- Le terme correctif sur la troisième expression $\alpha_3(N, MAP) * \frac{V_{EVC}}{MAT} \frac{P_3}{P_3^{nom}}$ vise à prendre en compte l'écart potentiel de la pression d'échappement et son impact sur la masse aspiré à la fermeture de la soupape d'échappement. La masse de gaz aspiré à la fermeture de la soupape d'échappement peut être représentée par la loi des gaz parfaits.

Un exemple de bénéfice de ce mode de réalisation est la détermination précise de la masse de gaz aspiré en présence de variation de conditions échappement.

Selon un second mode de réalisation de l'invention, le mécanisme de correction est modélisé en fonction de ladite au moins une condition de la température du moteur. Si la température du moteur n'est pas égale à celle avec laquelle le modèle a été calibré $(T_{INT} \neq T_{INT}^{nom}$ à cause de conditions de fonctionnement à froid ou de situations transitoires), alors les équations 8, 9 et 10 vont être impactées.

Selon ce second mode de réalisation de l'invention, le mécanisme de correction modélisé en fonction des conditions de la température du moteur consiste en une altération identique, appliquée à la pluralité de paramètres de calibration. Préférablement, les conditions de la température du moteur sont générées notamment au moyen de la variation de la mesure de la température des gaz aspirés à l'admission. Selon ce mode de réalisation de l'invention, on détermine ladite masse de gaz aspiré au moyen de l'équation 15.

Pour ce mode de réalisation, l'équation suivante résume la formulation du modèle avec ajout du correctif de prise en compte des conditions de température :

[Math 15]

$$m_{asp}^{INT} = \left( \alpha_1(N, MAP) \cdot \frac{T_{INT}^{nom}}{T_{INT}^{real}} \cdot \frac{MAP \cdot V_{IVC}}{R \cdot MAT} - \alpha_2(N, MAP) \cdot \frac{T_{INT}^{nom}}{T_{INT}^{real}} \cdot \frac{OF}{N \cdot MAT} - \alpha_3(N, MAP) \cdot \frac{T_{INT}^{nom}}{T_{INT}^{real}} \right. \\ \left. \cdot \frac{V_{EVC}}{MAT} \right)$$

Ainsi, dans cette équation le terme correctif correspond au rapport $\frac{T_{INT}^{nom}}{T_{INT}^{real}}$.

On peut également exprimer la température réelle comme étant égale à la température nominale de l'essai multiplié par deux termes correctifs :

[Math 16]

$$T_{INT}^{real} = T_{INT}^{nom} * \Theta_{Teau} * \Theta_{transient}$$

Où les deux facteurs correctifs font référence à des variations de température d'eau moteur et de conditions transitoires (inertie thermique du bloc moteur). Selon un mode de réalisation de l'invention, les conditions de la température du moteur peuvent dépendre des conditions transitoires de température du moteur, et de la température d'eau du moteur à combustion interne. On obtient alors l'équation suivante :

[Math 17]

$$m_{asp}^{INT} = \left( \alpha_1(N, MAP) \cdot \frac{MAP \cdot V_{IVC}}{R \cdot MAT} - \alpha_2(N, MAP) \cdot \frac{OF}{N \cdot MAT} - \alpha_3(N, MAP) \cdot \frac{V_{EVC}}{MAT} \right) \\ \cdot \frac{1}{\Theta_{Teau} * \Theta_{transient}}$$

La prise en compte de l'impact des conditions de température du bloc moteur est prise en compte par un facteur correctif. Les conditions de température du bloc moteur peuvent tenir compte, de manière préférentielle, de coefficients d'inertie thermique composée des différents sous-ensembles du moteur.

Selon un troisième mode de réalisation de l'invention, on peut combiner les deux mécanismes de correction, en fonction des conditions à l'échappement et des conditions de température. Selon ce mode de réalisation, on détermine ladite masse de gaz aspiré au moyen de l'équation :

[Math 18]

$$m_{asp}^{INT} = \left( \alpha_1(N, MAP) \cdot \frac{T_{INT}^{nom}}{T_{INT}^{real}} \cdot \frac{MAP \cdot V_{IVC}}{R \cdot MAT} - \alpha_2(N, MAP + P_3^{nom} - P_3) \cdot \frac{T_{INT}^{nom}}{T_{INT}^{real}} \cdot \frac{OF}{N \cdot MAT} \right.$$
$$\left. - \alpha_3(N, MAP) \cdot \frac{T_{INT}^{nom}}{T_{INT}^{real}} \cdot \frac{V_{EVC}}{MAT} \frac{P_3}{P_3^{nom}} \right)$$

Ou sous la forme :

[Math 19]

$$m_{asp}^{INT} = \left( \alpha_1(N, MAP) \cdot \frac{MAP \cdot V_{IVC}}{R \cdot MAT} - \alpha_2(N, MAP + P_3^{nom} - P_3) \cdot \frac{OF}{N \cdot MAT} - \alpha_3(N, MAP) \right.$$
$$\left. \cdot \frac{V_{EVC}}{MAT} \frac{P_3}{P_3^{nom}} \right) \cdot \frac{1}{\Theta_{Teau} * \Theta_{transient}}$$

La figure 3 illustre l'influence des mécanismes de correction sur la précision de l'estimation de la masse de gaz aspiré. Sur cette figure 3 on représente sur l'axe des abscisses l'augmentation de la pression d'échappement et de la température du cylindre (toutes autres conditions de fonctionnement étant fixes) et sur l'axe des ordonnées on représente la masse de gaz aspiré. On retrouve les courbes comparatives comme suit :

- La courbe M représente la valeur de la masse réelle mesurée,

- La courbe N représente la valeur de la masse estimée sans correction,

- La courbe P représente la valeur de la masse estimée avec le mécanisme de correction des conditions de pression (premier mode de réalisation),

- La courbe T représente la valeur de la masse estimée avec le mécanisme de correction des conditions de température (deuxième mode de réalisation),

- La courbe B représente la valeur de la masse estimée avec les deux mécanismes de correction conjoints (troisième mode de réalisation).

L'analyse de cette figure 3 permet de conclure que les mécanismes de correction selon le premier mode de réalisation et selon le second mode de réalisation de l'invention permettent d'améliorer de sensiblement l'estimation de la masse de gaz aspiré. Le troisième mode de réalisation, qui combine les deux mécanismes de correction, rapproche, quand à lui, le plus fidèlement l'estimation de la masse de gaz aspiré de la masse mesurée physiquement.

Selon un autre mode de réalisation de l'invention, on peut réaliser le contrôle du moteur à combustion interne par exemple on peut déterminer les positions des actionneurs de distribution variable en fonction de la masse de gaz aspiré estimée.

Le contrôle du moteur à combustion interne peut mettre en œuvre notamment le procédé décrit dans la demande de brevet FR2941266 (US8307814).

Comme il va de soi, l'invention ne se limite pas aux seules formes de réalisation décrites ci-dessus à titre d'exemple. Le périmètre de l'invention est défini par les revendications.

**Revendications**

**1.** Procédé de détermination d'une masse de gaz aspiré dans un cylindre d'un moteur à combustion interne, ledit cylindre comportant au moins une soupape d'admission et au moins une soupape d'échappement, le procédé étant mis en œuvre par un système de contrôle de moteur à combustion interne et dans lequel on met en œuvre les étapes suivantes :

- on détermine un régime moteur ;
- on détermine un volume de la chambre de combustion à la fermeture de ladite au moins une soupape d'admission ;
- on détermine un volume de la chambre de combustion à la fermeture de ladite au moins une soupape d'échappement ;
- on détermine une température de gaz d'admission et une pression de gaz d'admission ;
- on détermine une approximation d'une masse de gaz aspiré d'admission à partir du volume de la chambre de combustion à la fermeture de ladite au moins une soupape d'admission, de la une température de gaz d'admission et de la pression de gaz d'admission ;
- on détermine un paramètre de chevauchement de l'ouverture desdites au moins une soupape d'admission et au moins une soupape d'échappement à partir du volume de la chambre de combustion à la fermeture de ladite au moins une soupape d'admission et du volume de la chambre de combustion à la fermeture de ladite au moins une soupape d'échappement, du régime moteur et de la température de gaz d'admission ;
- on détermine une approximation d'une masse de gaz aspiré d'échappement à partir du volume de la chambre de combustion à la fermeture de ladite au moins une soupape d'échappement et de la température de gaz d'admission ; et
- on génère une pluralité de paramètres de calibration en fonction du régime moteur et de la pression de gaz d'admission
- on applique les paramètres de calibration au moins à la masse approximée de gaz aspiré d'admission, au paramètre de chevauchement de l'ouverture desdites au moins une soupape d'admission et au moins une soupape d'échappement et à la masse approximée de gaz aspiré d'échappement ;

**caractérisé en ce que** :

- on détermine au moins une condition à l'échappement et/ou au moins une condition de la température du moteur ; et
- on détermine la masse de gaz aspiré à l'admission au moyen d'une formule qui dépend de la masse approximée de gaz aspiré d'admission, du paramètre de chevauchement de l'ouverture desdites au moins une soupape d'admission et au moins une soupape d'échappement, de la masse approximée de gaz aspiré d'échappement auxquels on a appliqué les paramètres de calibration, et auxquels on applique un mécanisme de correction modélisé en fonction de ladite au moins une condition à l'échappement, de ladite au moins une condition de la température du moteur ou de la combinaison desdites conditions à l'échappement et de la température du moteur, et **en ce que**, le mécanisme de correction modélisé en fonction des conditions à l'échappement consiste en :

- une translation du paramètre de calibration pour corriger le paramètre de chevauchement de l'ouverture desdites au moins une soupape d'admission et au moins une soupape d'échappement ; et/ou
- une altération du paramètre de calibration de la masse de gaz aspiré d'échappement.

**2.** Procédé selon la revendication 1, dans lequel ladite au moins une condition à l'échappement est générée en fonction de la variation d'une pression de gaz à l'échappement.

**3.** Procédé selon la revendication 2 dans lequel les conditions à l'échappement sont générées au moyen d'un modèle de la pression des gaz à l'échappement.

**4.** Procédé selon l'une des revendications 1 à 3, dans lequel on détermine ladite masse de gaz aspiré au moyen de l'équation

$$m_{asp}^{INT} = \left( \alpha_1(N, MAP) \cdot \frac{MAP \cdot V_{IVC}}{R \cdot MAT} - \alpha_2(N, MAP + P_3^{nom} - P_3) \cdot \frac{OF}{N \cdot MAT} - \alpha_3(N, MAP) \cdot \frac{V_{EVC}}{MAT} \frac{P_3}{P_3^{nom}} \right)$$

, avec $m_{asp}^{INT}$ masse de gaz aspiré de l'admission, $\alpha_1$ paramètre de calibration établi en fonction du régime moteur et de la pression dans le collecteur d'admission, $\alpha_2$ paramètre de calibration établi en fonction du régime moteur et de la pression dans le collecteur d'admission, $\alpha_3$ paramètre de calibration établi en fonction du régime moteur et de la pression dans le collecteur d'admission, N régime moteur, MAP pression dans le collecteur d'admission, $V_{IVC}$ volume de la chambre de combustion à la fermeture de la soupape d'admission, MAT: température dans le collecteur d'admission, R constante des gaz, $P_3^{nom}$ pression nominale des gaz d'échappement, $P_3$ pression des gaz d'échappement, *OF* facteur de chevauchement.

5. Procédé selon l'une des revendications 1 à 3, dans lequel, le mécanisme de correction modélisé en fonction des conditions de la température du moteur consiste en une altération identique des paramètres de calibration en fonction des conditions de températures.

6. Procédé selon l'une des revendications 1 à 3 dans lequel les conditions de la température du moteur sont générées notamment au moyen de la variation de la mesure de la température des gaz aspirés à l'admission.

7. Procédé selon l'une des revendications 5 ou 6, dans lequel on détermine ladite masse de gaz aspiré au moyen de l'équation

$$m_{asp}^{INT} = \left( \alpha_1(N, MAP) \cdot \frac{T_{INT}^{nom}}{T_{INT}^{real}} \cdot \frac{MAP \cdot V_{IVC}}{R \cdot MAT} - \alpha_2(N, MAP) \cdot \frac{T_{INT}^{nom}}{T_{INT}^{real}} \cdot \frac{OF}{N \cdot MAT} - \alpha_3(N, MAP) \cdot \frac{T_{INT}^{nom}}{T_{INT}^{real}} \cdot \frac{V_{EVC}}{MAT} \right),$$

avec $m_{asp}^{INT}$ masse de gaz aspiré de l'admission, $\alpha_1$ paramètre de calibration établi en fonction du régime moteur et de la pression dans le collecteur d'admission, $\alpha_2$ paramètre de calibration établi en fonction du régime moteur et de la pression dans le collecteur d'admission, $\alpha_3$ paramètre de calibration établi en fonction du régime moteur et de la pression dans le collecteur d'admission, N régime moteur, MAP pression dans le collecteur d'admission, $V_{IVC}$ volume de la chambre de combustion à la fermeture de la soupape d'admission, MAT: température dans le collecteur d'admission, R constante des gaz, *OF* facteur de chevauchement, $T_{INT}^{real}$ température de gaz aspiré à l'admission, mesurée, $T_{INT}^{nom}$ température de gaz aspiré à l'admission, nominale.

8. Procédé selon l'une des revendications 1 à 5, dans lequel on détermine ladite masse de gaz aspiré au moyen de l'équation :

$$m_{asp}^{INT} = \left( \alpha_1(N, MAP) \cdot \frac{T_{INT}^{nom}}{T_{INT}^{real}} \cdot \frac{MAP \cdot V_{IVC}}{R \cdot MAT} - \alpha_2(N, MAP + P_3^{nom} - P_3) \cdot \frac{T_{INT}^{nom}}{T_{INT}^{real}} \cdot \frac{OF}{N \cdot MAT} - \alpha_3(N, MAP) \cdot \right.$$

$$\left. \frac{T_{INT}^{nom}}{T_{INT}^{real}} \cdot \frac{V_{EVC}}{MAT} \frac{P_3}{P_3^{nom}} \right)$$ avec $m_{asp}^{INT}$ masse de gaz aspiré de l'admission, $\alpha_1$ paramètre de calibration établi en fonction du régime moteur et de la pression dans le collecteur d'admission, $\alpha_2$ paramètre de calibration établi en fonction du régime moteur et de la pression dans le collecteur d'admission, $\alpha_3$ paramètre de calibration établi en fonction du régime moteur et de la pression dans le collecteur d'admission, N régime moteur, MAP pression dans le collecteur d'admission, $V_{IVC}$ volume de la chambre de combustion à la fermeture de la soupape d'admission, MAT: température dans le collecteur d'admission, R constante des gaz, *OF* facteur de chevauchement, $T_{INT}^{real}$ température de gaz aspiré à l'admission, mesurée, $T_{INT}^{nom}$ température de gaz aspiré à l'admission, nominale, $P_3^{nom}$ pression nominale des gaz d'échappement, $P_3$ pression des gaz d'échappement.

9. Procédé selon la revendication 5 dans lequel les conditions de la température du moteur dépendent notamment des conditions transitoires de température du moteur.

10. Procédé selon la revendication 9, dans lequel on détermine ladite masse de gaz aspiré au moyen de l'équation :

$$m_{asp}^{INT} = \left( \alpha_1(N, MAP) \cdot \frac{MAP \cdot V_{IVC}}{R \cdot MAT} - \alpha_2(N, MAP) \cdot \frac{OF}{N \cdot MAT} - \alpha_3(N, MAP) \cdot \frac{V_{EVC}}{MAT} \right) \cdot \frac{1}{\Theta_{Teau} * \Theta_{transient}} , \text{avec}$$

$m_{asp}^{INT}$ masse de gaz aspiré de l'admission, $\alpha_1$ paramètre de calibration établi en fonction du régime moteur et de la pression dans le collecteur d'admission, $\alpha_2$ paramètre de calibration établi en fonction du régime moteur et de la pression dans le collecteur d'admission, $\alpha_3$ paramètre de calibration établi en fonction du régime moteur et de la pression dans le collecteur d'admission, N régime moteur, MAP pression dans le collecteur d'admission, $V_{IVC}$ volume de la chambre de combustion à la fermeture de la soupape d'admission, MAT: température dans le collecteur d'admission, R constante des gaz, *OF* facteur de chevauchement, $\Theta_{Teau}$ fonction de la température moteur, qui représente l'impact de la température d'eau moteur sur le remplissage, $\Theta_{transient}$ fonction de la température moteur, qui représente l'impact de l'inertie thermique du bloc moteur sur le remplissage.

**11.** Procédé selon l'une des revendications précédentes dans lequel le moteur à combustion interne est équipé d'une distribution variable et lesdites au moins une soupape d'admission et au moins une soupape d'échappement étant l'une, l'autre ou les deux actionnées par au moins un actionneur de distribution variable.

**12.** Procédé selon l'une des revendications précédentes dans lequel ladite au moins une soupape d'admission est reliée à un collecteur d'admission qui est muni d'un papillon d'admission qui est piloté notamment en fonction du paramètre de chevauchement de l'ouverture desdites au moins une soupape d'admission et au moins une soupape d'échappement ;

**13.** Procédé selon l'une des revendications 11 ou 12, dans lequel on détermine les positions des actionneurs de distribution variable en fonction de la masse de gaz aspiré estimée.

**14.** Système de contrôle d'un moteur à combustion interne mettant en œuvre le procédé selon l'une des revendications précédentes.

**Patentansprüche**

**1.** Verfahren zur Bestimmung einer Ansauggasmasse in einem Zylinder eines Verbrennungsmotors, wobei der Zylinder mindestens ein Einlassventil und mindestens ein Auslassventil umfasst, wobei das Verfahren von einem Verbrennungsmotorsteuerungssystem implementiert wird und bei ihm die folgenden Schritte implementiert werden:

- man bestimmt eine Motordrehzahl;
- man bestimmt ein Volumen des Verbrennungsraums beim Schließen des mindestens einen Einlassventils;
- man bestimmt ein Volumen des Verbrennungsraums beim Schließen des mindestens einen Auslassventils;
- man bestimmt eine Einlassgastemperatur und einen Einlassgasdrucks;
- man bestimmt eine Approximation einer Einlass-Ansauggasmasse ausgehend von dem Volumen des Verbrennungsraums beim Schließen des mindestens einen Einlassventils, von der Einlassgastemperatur und von dem Einlassgasdruck;
- man bestimmt einen Überschneidungsparameters für das Öffnen des mindestens einen Einlassventils und des mindestens einen Auslassventils ausgehend von dem Volumen des Verbrennungsraums beim Schließen des mindestens einen Einlassventils und von dem Volumen des Verbrennungsraums beim Schließen des mindestens einen Auslassventils, von der Motordrehzahl und von der Einlassgastemperatur;
- man bestimmt eine Approximation einer Auslass-Ansauggasmasse ausgehend von dem Volumen des Verbrennungsraums beim Schließen des mindestens einen Auslassventils und von der Einlassgastemperatur; und
- man erzeugt eine Mehrzahl von Kalibrierungsparametern in Abhängigkeit von der Motordrehzahl und von dem Einlassgasdruck
- man wendet die Kalibrierungsparameter mindestens auf die approximierte Einlass-Ansauggasmasse, auf den Überschneidungsparameter für das Öffnen des mindestens einen Einlassventils und des mindestens einen Auslassventils und auf die approximierte Auslass-Ansauggasmasse an;
**dadurch gekennzeichnet, dass**:

- man mindestens eine Bedingung am Auslass und/oder mindestens eine Bedingung der Temperatur des Motors bestimmt; und
- man die Ansauggasmasse am Einlass mittels einer Formel bestimmt, die abhängt von der approximierten Einlass-Ansauggasmasse, von dem Überschneidungsparameter für das Öffnen des mindestens einen Einlassventils und mindestens einen Auslassventils, von der approximierten Auslass-Ansauggasmasse, auf die man die Kalibrierungsparameter angewandt hat und auf die man einen Korrekturmechanismus anwendet, der in Abhängigkeit von der mindestens einen Bedingung am Auslass, von der mindestens einen Bedingung der Temperatur des Motors oder von der Kombination der Bedingungen am Auslass und der Temperatur des Motors modelliert wird, und dadurch, dass der in Abhängigkeit von den Bedingungen am Auslass modellierte Korrekturmechanismus in Folgendem besteht:
- einer Translation des Kalibrierungsparameters, um den Überschneidungsparameter für das Öffnen des mindestens einen Einlassventils und mindestens einen Auslassventils zu korrigieren; und/oder

- einer Veränderung des Kalibrierungsparameters der Auslass-Ansauggasmasse.

2. Verfahren nach Anspruch 1, wobei die mindestens eine Bedingung am Auslass in Abhängigkeit von der Variation eines Gasdrucks am Auslass erzeugt wird.

3. Verfahren nach Anspruch 2, wobei die Bedingungen am Auslass mittels eines Modells des Drucks der Gase am Auslass erzeugt werden.

4. Verfahren nach einem der Ansprüche 1 bis 3, wobei man die Ansauggasmasse mittels der Gleichung

$$m_{asp}^{INT} = \left(\alpha_1(N, MAP) \cdot \frac{MAP \cdot V_{IVC}}{R \cdot MAT} - \alpha_2(N, MAP + P_3^{nom} - P_3) \cdot \frac{OF}{N \cdot MAT} - \alpha_3(N, MAP) \cdot \frac{V_{EVC}}{MAT} \frac{P_3}{P_3^{nom}}\right)$$

bestimmt, wobei $m_{asp}^{INT}$ die Einlass-Ansauggasmasse ist, $\alpha_1$ ein in Abhängigkeit von der Motordrehzahl und vom Druck im Einlasskrümmer ermittelter Kalibrierungsparameter ist, $\alpha_2$ ein in Abhängigkeit von der Motordrehzahl und vom Druck im Einlasskrümmer ermittelter Kalibrierungsparameter ist, $\alpha_3$ ein in Abhängigkeit von der Motordrehzahl und vom Druck im Einlasskrümmer ermittelter Kalibrierungsparameter ist, N die Motordrehzahl ist, MAP der Druck im Einlasskrümmer ist, $V_{IVC}$ das Volumen des Verbrennungsraums beim Schließen des Einlassventils ist, MAT die Temperatur im Einlasskrümmer ist, R eine Konstante der Gase ist, $P_3^{nom}$ der Nenndruck der Auslassgase ist, $P_3$ der Druck der Auslassgase ist, OF ein Überschneidungsfaktor ist.

5. Verfahren nach einem der Ansprüche 1 bis 3, wobei der in Abhängigkeit von den Bedingungen der Temperatur des Motors modellierte Korrekturmechanismus in einer identischen Veränderung der Kalibrierungsparameter in Abhängigkeit von den Temperaturbedingungen besteht.

6. Verfahren nach einem der Ansprüche 1 bis 3, wobei die Bedingungen der Temperatur des Motors insbesondere mittels der Variation der Messung der Temperatur der Ansauggase am Einlass erzeugt werden.

7. Verfahren nach einem der Ansprüche 5 oder 6, wobei man die Ansauggasmasse mittels der Gleichung

$$m_{asp}^{INT} = \left(\alpha_1(N, MAP) \cdot \frac{T_{INT}^{nom}}{T_{INT}^{real}} \cdot \frac{MAP \cdot V_{IVC}}{R \cdot MAT} - \alpha_2(N, MAP) \cdot \frac{T_{INT}^{nom}}{T_{INT}^{real}} \cdot \frac{OF}{N \cdot MAT} - \alpha_3(N, MAP) \cdot \frac{T_{INT}^{nom}}{T_{INT}^{real}} \cdot \frac{V_{EVC}}{MAT}\right)$$

bestimmt, wobei $m_{asp}^{INT}$ die Einlass-Ansauggasmasse ist, $\alpha_1$ ein in Abhängigkeit von der Motordrehzahl und vom Druck im Einlasskrümmer ermittelter Kalibrierungsparameter ist, $\alpha_2$ ein in Abhängigkeit von der Motordrehzahl und vom Druck im Einlasskrümmer ermittelter Kalibrierungsparameter ist, $\alpha_3$ ein in Abhängigkeit von der Motordrehzahl und vom Druck im Einlasskrümmer ermittelter Kalibrierungsparameter ist, N die Motordrehzahl ist, MAP der Druck im Einlasskrümmer ist, $V_{IVC}$ das Volumen des Verbrennungsraums beim Schließen des Einlassventils ist, MAT die Temperatur im Einlasskrümmer ist, R eine Konstante der Gase ist, OF ein Überschneidungsfaktor ist, $T_{INT}^{real}$ die gemessene Ansauggastemperatur am Einlass ist, $T_{INT}^{nom}$ die Nenn-Ansauggastemperatur am Einlass ist.

8. Verfahren nach einem der Ansprüche 1 bis 5, wobei man die Ansauggasmasse mittels der Gleichung:

$$m_{asp}^{INT} = \left(\alpha_1(N, MAP) \cdot \frac{T_{INT}^{nom}}{T_{INT}^{real}} \cdot \frac{MAP \cdot V_{IVC}}{R \cdot MAT} - \alpha_2(N, MAP + P_3^{nom} - P_3) \cdot \frac{T_{INT}^{nom}}{T_{INT}^{real}} \cdot \frac{OF}{N \cdot MAT} - \right.$$
$$\left. \alpha_3(N, MAP) \cdot \frac{T_{INT}^{nom}}{T_{INT}^{real}} \cdot \frac{V_{EVC}}{MAT} \frac{P_3}{P_3^{nom}}\right)$$

bestimmt, wobei $m_{asp}^{INT}$ die Einlass-Ansauggasmasse ist, $\alpha_1$ ein in Abhängigkeit von der Motordrehzahl und vom Druck im Einlasskrümmer ermittelter Kalibrierungsparameter ist, $\alpha_2$ ein in Abhängigkeit von der Motordrehzahl und vom Druck im Einlasskrümmer ermittelter Kalibrierungsparameter ist, $\alpha_3$ ein in Abhängigkeit von der Motordrehzahl und vom Druck im Einlasskrümmer ermittelter Kalibrierungsparameter ist, N die Motordrehzahl ist, MAP der Druck im Einlasskrümmer ist, $V_{IVC}$ das Volumen des Verbrennungsraums beim Schließen des Einlassventils ist, MAT die Temperatur im Einlasskrümmer ist, R eine Konstante der Gase ist, OF ein Überschneidungsfaktor ist, $T_{INT}^{real}$ die gemessene Ansauggastemperatur am Einlass ist, $T_{INT}^{nom}$ die Nenn-Ansauggastemperatur am Einlass ist, $P_3^{nom}$ der Nenndruck der Auslassgase ist, $P_3$ der Druck der Auslassgase ist.

9. Verfahren nach Anspruch 5, wobei die Bedingungen der Temperatur des Motors insbesondere von den transienten Temperaturbedingungen des Motors abhängen.

10. Verfahren nach Anspruch 9, wobei man die Ansauggasmasse mittels der Gleichung:

$$m_{asp}^{INT} = \left( \alpha_1(N, MAP) \cdot \frac{MAP \cdot V_{IVC}}{R \cdot MAT} - \alpha_2(N, MAP) \cdot \frac{OF}{N \cdot MAT} - \alpha_3(N, MAP) \cdot \frac{V_{EVC}}{MAT} \right) \cdot \frac{1}{\Theta_{Teau} * \Theta_{transient}}$$

bestimmt, wobei $m_{asp}^{INT}$ die Einlass-Ansauggasmasse ist, $\alpha_1$ ein in Abhängigkeit von der Motordrehzahl und vom Druck im Einlasskrümmer ermittelter Kalibrierungsparameter ist, $\alpha_2$ ein in Abhängigkeit von der Motordrehzahl und vom Druck im Einlasskrümmer ermittelter Kalibrierungsparameter ist, $\alpha_3$ ein in Abhängigkeit von der Motordrehzahl und vom Druck im Einlasskrümmer ermittelter Kalibrierungsparameter ist, N die Motordrehzahl ist, MAP der Druck im Einlasskrümmer ist, $V_{IVC}$ das Volumen des Verbrennungsraums beim Schließen des Einlassventils ist, MAT die Temperatur im Einlasskrümmer ist, R eine Konstante der Gase ist, OF ein Überschneidungsfaktor ist, $\Theta_{Teau}$ eine Funktion der Motortemperatur ist, die den Einfluss der Motorwassertemperatur auf die Füllung repräsentiert, $\Theta_{transient}$ eine Funktion der Motortemperatur ist, die den Einfluss der thermischen Trägheit des Motorblocks auf die Füllung repräsentiert.

11. Verfahren nach einem der vorhergehenden Ansprüche, wobei der Verbrennungsmotor mit einer variablen Nockenwellenverstellung ausgestattet ist und wobei von dem mindestens einen Einlassventil und dem mindestens einen Auslassventil das eine, das andere oder beide durch mindestens einen variablen Nockenwellenversteller betätigt werden.

12. Verfahren nach einem der vorhergehenden Ansprüche, wobei das mindestens eine Einlassventil mit einem Einlasskrümmer verbunden ist, der mit einer Einlassdrosselklappe versehen ist, die insbesondere in Abhängigkeit von dem Überschneidungsparameter für das Öffnen des mindestens einen Einlassventils und mindestens einen Auslassventils angesteuert wird.

13. Verfahren nach einem der Ansprüche 11 oder 12, wobei man die Positionen der variablen Nockenwellenversteller in Abhängigkeit von der geschätzten Ansauggasmasse bestimmt.

14. Steuerungssystem eines Verbrennungsmotors, welches das Verfahren nach einem der vorhergehenden Ansprüche implementiert.

**Claims**

1. Method for determining a mass of gas sucked into a cylinder of an internal combustion engine, said cylinder comprising at least one intake valve and at least one exhaust valve, the method being implemented by an internal combustion engine control system and in which the following steps are implemented:

   - an engine speed is determined;
   - a volume of the combustion chamber upon closure of said at least one intake valve is determined;
   - a volume of the combustion chamber upon closure of said at least one exhaust valve is determined;
   - an intake gas temperature and an intake gas pressure are determined;
   - an approximation of an intake sucked-in gas mass is determined from the volume of the combustion chamber upon closure of said at least one intake valve, from the intake gas temperature and from the intake gas pressure;
   - a parameter of overlap of the opening of said at least one intake valve and at least one exhaust valve is determined from the volume of the combustion chamber upon closure of said at least one intake valve and from the volume of the combustion chamber upon closure of said at least one exhaust valve, from the engine speed and from the intake gas temperature;
   - an approximation of an exhaust sucked-in gas mass is determined from the volume of the combustion chamber upon closure of said at least one exhaust valve and from the intake gas temperature; and
   - a plurality of calibration parameters are generated as a function of the engine speed and of the intake gas pressure;
   - the calibration parameters are applied at least to the approximated intake sucked-in gas mass, to the parameter of overlap of the opening of said at least one intake valve and at least one exhaust valve and to the approximated exhaust sucked-in gas mass;
   **characterized in that**:

- at least one exhaust condition and/or at least one engine temperature condition are/is determined; and
- the mass of gas sucked in at the intake is determined by means of a formula which depends on the approximated intake sucked-in gas mass, on the parameter of overlap of the opening of said at least one intake valve and at least one exhaust valve, on the approximated exhaust sucked-in gas mass, to which the calibration parameters have been applied, and to which is applied a correction mechanism modelled as a function of said at least one exhaust condition, of said at least one engine temperature condition or of the combination of said exhaust and engine temperature conditions, and **in that** the correction mechanism modelled as a function of the exhaust conditions consists of:
- a translation of the calibration parameter in order to correct the parameter of overlap of the opening of said at least one intake valve and at least one exhaust valve; and/or
- an alteration of the calibration parameter of the exhaust sucked-in gas mass.

2. Method according to Claim 1, wherein said at least one exhaust condition is generated as a function of the variation of an exhaust gas pressure.

3. Method according to Claim 2, wherein the exhaust conditions are generated by means of a model of the exhaust gas pressure.

4. Method according to one of Claims 1 to 3, wherein said sucked-in gas mass is determined by means of the equation

.

$$m_{asp}^{INT} = \left( \alpha_1(N, MAP) \cdot \frac{MAP \cdot V_{IVC}}{R \cdot MAT} - \alpha_2(N, MAP + P_3^{nom} - P_3) \cdot \frac{OF}{N \cdot MAT} - \alpha_3(N, MAP) \cdot \frac{V_{EVC}}{MAT} \frac{P_3}{P_3^{nom}} \right)$$

, with $m_{asp}^{INT}$ mass of gas sucked in from the intake, $\alpha_1$ calibration parameter established as a function of the engine speed and of the pressure in the intake manifold, $\alpha_2$ calibration parameter established as a function of the engine speed and of the pressure in the intake manifold, $\alpha_3$ calibration parameter established as a function of the engine speed and of the pressure in the intake manifold, N engine speed, MAP pressure in the intake manifold, $V_{IVC}$ volume of the combustion chamber upon closure of the intake valve, MAT: temperature in the intake manifold, R gas constant, $P_3^{nom}$ nominal exhaust gas pressure, $P_3$ exhaust gas pressure, OF overlap factor.

5. Method according to one of Claims 1 to 3, wherein the correction mechanism modelled as a function of the engine temperature conditions consists of an identical alteration of the calibration parameters as a function of the temperature conditions.

6. Method according to one of Claims 1 to 3, wherein the engine temperature conditions are generated in particular by means of the variation of the measurement of the temperature of the gases sucked in at the intake.

7. Method according to either of Claims 5 and 6, wherein said mass of sucked-in gas is determined by means of the equation

$$m_{asp}^{INT} = \left( \alpha_1(N, MAP) \cdot \frac{T_{INT}^{nom}}{T_{INT}^{real}} \cdot \frac{MAP \cdot V_{IVC}}{R \cdot MAT} - \alpha_2(N, MAP) \cdot \frac{T_{INT}^{nom}}{T_{INT}^{real}} \cdot \frac{OF}{N \cdot MAT} - \alpha_3(N, MAP) \cdot \frac{T_{INT}^{nom}}{T_{INT}^{real}} \cdot \frac{V_{EVC}}{MAT} \right)$$

, with $m_{asp}^{INT}$ mass of gas sucked in from the intake, $\alpha_1$ calibration parameter established as a function of the engine speed and of the pressure in the intake manifold, $\alpha_2$ calibration parameter established as a function of the engine speed and of the pressure in the intake manifold, $\alpha_3$ calibration parameter established as a function of the engine speed and of the pressure in the intake manifold, N engine speed, MAP pressure in the intake manifold, $V_{IVC}$ volume of the combustion chamber upon closure of the intake valve, MAT: temperature in the intake manifold, R gas constant, OF overlap factor, $T_{INT}^{real}$ measured temperature of gas sucked in at the intake, $T_{INT}^{nom}$ nominal temperature of gas sucked in at the intake.

8. Method according to one of Claims 1 to 5, wherein said mass of sucked-in gas is determined by means of the equation:

$$m_{asp}^{INT} = \left( \alpha_1(N, MAP) \cdot \frac{T_{INT}^{nom}}{T_{INT}^{real}} \cdot \frac{MAP \cdot V_{IVC}}{R \cdot MAT} - \alpha_2(N, MAP + P_3^{nom} - P_3) \cdot \frac{T_{INT}^{nom}}{T_{INT}^{real}} \cdot \frac{OF}{N \cdot MAT} - \right.$$

$$\alpha_3(N, MAP) \cdot \frac{T_{INT}^{nom}}{T_{INT}^{real}} \cdot \frac{V_{EVC}}{MAT} \frac{P_3}{P_3^{nom}} \Bigg)$$ with $m_{asp}^{INT}$ mass of gas sucked in from the intake, $\alpha_1$ calibration parameter established as a function of the engine speed and of the pressure in the intake manifold, $\alpha_2$ calibration parameter established as a function of the engine speed and of the pressure in the intake manifold, $\alpha_3$ calibration parameter established as a function of the engine speed and of the pressure in the intake manifold, N engine speed, MAP pressure in the intake manifold, $V_{IVC}$ volume of the combustion chamber upon closure of the intake valve, MAT: temperature in the intake manifold, R gas constant, OF overlap factor, $T_{INT}^{real}$ measured temperature of sucked-in gas at the intake, $T_{INT}^{nom}$ nominal temperature of sucked-in gas at the intake, $P_3^{nom}$ nominal exhaust gas pressure, $P_3$ exhaust gas pressure.

9. Method according to Claim 5, wherein the engine temperature conditions depend in particular on the transient engine temperature conditions.

10. Method according to Claim 9, wherein said mass of sucked-in gas is determined by means of the equation:

$$m_{asp}^{INT} = \left( \alpha_1(N, MAP) \cdot \frac{MAP \cdot V_{IVC}}{R \cdot MAT} - \alpha_2(N, MAP) \cdot \frac{OF}{N \cdot MAT} - \alpha_3(N, MAP) \cdot \frac{V_{EVC}}{MAT} \right) \cdot \frac{1}{\Theta_{Twater} * \Theta_{transient}}$$

, with $m_{asp}^{INT}$ mass of gas sucked in from the intake, $\alpha_1$ calibration parameter established as a function of the engine speed and of the pressure in the intake manifold, $\alpha_2$ calibration parameter established as a function of the engine speed and of the pressure in the intake manifold, $\alpha_3$ calibration parameter established as a function of the engine speed and of the pressure in the intake manifold, N engine speed, MAP pressure in the intake manifold, $V_{IVC}$ volume of the combustion chamber upon closure of the intake valve, MAT: temperature in the intake manifold, R gas constant, OF overlap factor, $\Theta_{Twater}$ function of the engine temperature, which represents the impact of the engine water temperature on the filling, $\Theta_{transient}$ function of the engine temperature, which represents the impact of the thermal inertia of the engine block on the filling.

11. Method according to one of the preceding claims, wherein the internal combustion engine is equipped with variable valve timing and said at least one intake valve and at least one exhaust valve being the one, the other or both actuated by at least one variable valve timing actuator.

12. Method according to one of the preceding claims, wherein said at least one intake valve is connected to an intake manifold which is provided with an intake throttle valve which is controlled in particular as a function of the parameter of overlap of the opening of said at least one intake valve and at least one exhaust valve.

13. Method according to either of Claims 11 and 12, wherein the positions of the variable valve timing actuators are determined as a function of the estimated mass of sucked-in gas.

14. System for controlling an internal combustion engine implementing the method according to one of the preceding claims.

[Fig 1]

[Fig 2]

[Fig 3]

**EP 4 222 363 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007060349 A
- FR 2941266
- US 8307814 B

**Littérature non-brevet citée dans la description**

- **LEROY, THOMAS** ; **JONATHAN CHAUVIN**. Control-oriented aspirated masses model for variable-valve-actuation engines. *Control Engineering Practice*, 2013, vol. 21. (12), 1744-1755